# EUROPÄISCHE PATENTANMELDUNG

(11) **EP 4 036 434 A1**
(43) Veröffentlichungstag der Anmeldung: **03.08.2022**
(21) Anmeldenummer: 21213198.1
(22) Anmeldetag: 08.12.2021
(51) Int. Cl.: F16F 1/38

(54) **ELASTISCHES LAGER**

(30) Priorität: 28.01.2021 DE 102021101999
(71) Anmelder: Vibracoustic SE, 64293 Darmstadt (DE)
(72) Erfinder: Dürre, Markus, 79395 Neuenburg am Rhein (DE); Arnold, Jennifer, 79418 Schliengen (DE); Terhardt, Karsten, 79395 Neuenburg am Rhein (DE); Götz, Frederik, 79206 Breisach am Rhein (DE)
(74) Vertreter: Patentanwälte Olbricht Buchhold Keulertz

(57) **Zusammenfassung**

Vorgeschlagen wird ein elastisches Lager, umfassend eine Masse (4), die mindestens eine Befestigungsbohrung (6) für eine Befestigungshülse (8) aufweist, wobei die Befestigungsbohrung (6) von einer Zentrallängsachse (Z) durchsetzt ist, mindestens eine Befestigungshülse (8) mit einem sich in Radialrichtung (R) erstreckenden Kragenabschnitt (10) und einem sich in Längsrichtung (L) erstreckenden Schaftabschnitt (12), wobei die Befestigungshülse (8) in der Befestigungsbohrung (6) festgelegt ist, sowie einen Elastomerkörper (14), welcher außenumfangsseitig der Befestigungshülse (8) angeordnet ist, wobei der Elastomerkörper (14) im Bereich des Schaftabschnitts (12) eine durchmessererweiternde Kontur (16) aufweist, deren Durchmesser mit zunehmendem Längsabstand zum Kragenabschnitt (10) zunimmt und die Befestigungsbohrung (6) eine durchmessererweiternde Kontur (18) aufweist, die sich in gleichem Maße wie die durchmessererweiternde Kontur (16) des Elastomerkörpers (14) erweitert, wobei der Elastomerkörper (14) durch die Masse (4) und die Befestigungshülse (8) zumindest in Radialrichtung (R) vorgespannt ist.

## Beschreibung

Die Erfindung betrifft ein elastisches Lager gemäß dem Oberbegriff von Anspruch 1.

Elastische Lager sind aus der Praxis bekannt und können eine Masse wie beispielsweise eine Tilgermasse und eine Befestigungshülse umfassen, die in einer Befestigungsbohrung der Masse eingesetzt ist. Mit der Hülse kann eine schwingende Vorrichtung verbunden werden (Tilgerfunktion) und/oder eine Vorrichtung gegenüber welcher Schwingungen isoliert werden sollen (Entkopplungsfunktion). Zwischen der Masse und der Befestigungshülse ist eine Elastomerschicht angeordnet. Als Verliersicherung ist es im Automobilbau beispielsweise üblich einen Hinterschnitt zwischen Masse und Befestigungshülse durch einen radialen Kragenabschnitt der Hülse zu realisieren, der einen größeren Durchmesser als die Befestigungsbohrung aufweist. Eine übliche Befestigungshülse umfasst einen zylindrischen Abschnitt, der den zylindrischen Elastomerkörper tragen kann, bei dem eine radiale Überdeckung zwischen Elastomerschicht und Befestigungsbohrung für einen zylindrischen Pressitz mit ausreichender Reibkraft bewirkt.

Durch die hohe Anzahl an Betriebsschwingspielen sowie einzelner großamplitudiger Erschütterungsereignisse mit entsprechender Relativbewegung zwischen Masse und Befestigungshülse in Kombination mit gegebenenfalls erhöhter Temperatur kann der Reibschluss an der Elastomerschicht ein axiales Auswandern der Masse unter Umständen nicht verhindern. Auch die Vorspannung der Elastomerschicht kann auf Dauer ein axiales Auswandern der Masse bewirken. Nach bleibender axialer Verschiebung der Masse relativ zur Befestigungshülse kann es zu metallischem Anschlagen mit der Vorrichtung kommen oder zu einer vollständigen Blockade der Masse mit der Folge, dass die Tilgerwirkung oder Entkopplungswirkung nicht mehr gegeben ist. Zudem kann durch kardanisches Aushebeln das axiale Verrutschen nicht ausgeschlossen oder sicher verhindert werden.

Aufgabe der Erfindung ist es daher, ein elastisches Lager zu schaffen, welches eine dauerhaftere und prozesssichere Fixierung der Befestigungshülste über die ganze Lebensdauer ermöglicht.

Hauptmerkmale der Erfindung sind im kennzeichnenden Teil von Anspruch 1 angegeben. Ausgestaltungen sind Gegenstand der Ansprüche 2 bis 9.

Erfindungsgemäß wird ein elastisches Lager vorgeschlagen, umfassend eine Masse, die mindestens eine Befestigungsbohrung für eine Befestigungshülse aufweist, wobei die Befestigungsbohrung von einer Zentrallängsachse durchsetzt ist, mindestens eine Befestigungshülse mit einem sich in Radialrichtung erstreckenden Kragenabschnitt und einem sich in Längsrichtung erstreckenden Schaftabschnitt, wobei die Befestigungshülse in der Befestigungsbohrung festgelegt ist, sowie einen Elastomerkörper, welcher außenumfangsseitig der Befestigungshülse angeordnet ist, wobei der Elastomerkörper im Bereich des Schaftabschnitts eine durchmessererweiternde Kontur aufweist, deren Durchmesser mit zunehmendem Längsabstand zum Kragenabschnitt zunimmt und die Befestigungsbohrung eine durchmessererweiternde Kontur aufweist, die sich in gleichem Maße wie die durchmessererweiternde Kontur des Elastomerkörpers erweitert wobei der Elastomerkörper durch die Masse und die Befestigungshülse zumindest in Radialrichtung vorgespannt ist.

Durch die durchmessererweiternde Kontur des Elastomerkörpers, kann nun ein axiales Auswandern der Befestigungshülse in beide Axialrichtungen sicher verhindert werden. Der Elastomerkörper, der zumindest im Bereich des Schaftabschnitts kegelstumpfförmig ausgebildet sein kann, weist eine radiale Überdeckung zur Innenkontur der Befestigungsbohrung auf. Bei axialer Krafteinwirkung entsteht eine "Normalkraft" in der Reibfläche zum Elastomerkörper und/oder zur Masse, je nach Anordnung des Elastomerkörpers, die das unbeabsichtigte Herauswandern verhindert. Zudem führt die durchmessererweiternde Kontur des Elastomerkörpers dazu, dass die Befestigungshülse auch nach großamplitudigen Erschütterungsereignissen in die ursprüngliche Lage zurückkehren kann, da die Normalkomponente durch die Schrägstellung der Durchmessererweiterung höher ist als bei rein zylindrischem Pressverband. Neben der höheren Normalkomponente kann am größeren Durchmesser der Durchmessererweiterung auch ein klassischer Formschluss gegeben sein. Denkbar ist, dass der größere Durchmesser der Kontur an einer Anschraubseite liegt, also auf derjenigen Seite in welche ein Befestigungsmittel oder eine Schraube eingeschraubt werden kann, um dort mit einer Vorrichtung verschraubt zu werden. Die Vorrichtung, gegenüber welcher isoliert werden soll, kann beispielsweise eine Karosserie sein. Das elastische Lager kann beispielsweise ein Schwingungstilger, ein Gummilager oder eine Lagerbuchse sein. Die Masse kann beispielsweise eine Tilgermasse oder ein Hilfs- /Nebenaggregat bzw. ein Befestigungsbauteil sein.

Der größte Außendurchmesser der durchmessererweiternden Kontur des Elastomerkörpers ist größer als der kleinste Innendurchmesser der Befestigungsbohrung, durch welchen die Befestigungshülse zu stecken ist. Dadurch hat der Elastomerkörper eine radiale Überdeckung zur Innenkontur der Masse. Mit Vorteil lässt sich während der Montage beim Einsetzen der Befestigungshülse in die Befestigungsbohrung daher der Elastomerkörper wegdrücken. Nach der Montage wird der Elastomerkörper durch die hohe Steifigkeit der Masse und/oder der Befestigungshülse abgestützt.

Die durchmessererweiternden Konturen der Befestigungsbohrung und der Befestigungshülse können längsschnittlich parallel zueinander verlaufen.

Gemäß einer denkbaren Weiterbildung des erfindungsgemäßen Lagers kann die Elastomerschicht von der Masse oder von der Befestigungshülse getragen oder dort anvulkanisiert sein. Letztere Ausgestaltung verbessert einen Herstellungsvorgang dadurch, dass zu einer Vulkanisation nicht die ganze Masse in das Werkzeug eingelegt werden muss, was sehr viel Platz im Werkzeug und Energie spart, die andernfalls nötig ist, um die Masse zu erhitzen. Alternativ kann die Elastomerschicht ein separates Bauteil sein, welches an der Masse und der Hülse lediglich kraft- und/oder formschlüssig anliegt.

Gemäß einer Weiterbildung des erfindungsgemäßen Lagers kann die Befestigungshülse im Bereich des Schaftabschnitts eine durchmessererweiternde Kontur aufweisen, die sich in gleichem Maße wie die durchmessererweiternde Kontur des Elastomerkörpers erweitert. Ein Wegdrücken des Elastomerkörpers nach Montage wird durch diesen Hinterbau noch sicherer verhindert, da die Befestigungshülse nicht komprimierbar ist und dem Elastomerkörper kein Raum zum Ausweichen bietet.

Gemäß einer Weiterbildung des erfindungsgemäßen Lagers kann der Elastomerkörper einen Kragenbereich aufweisen, welcher vom Kragenabschnitt getragen ist und an einer Stufe in der Befestigungsbohrung anliegt. Der Elastomerkörper weist somit zumindest zwei Abschnitte auf, nämlich einen Klemmbereich im Bereich des Schaftabschnitts der Befestigungshülse, der die durchmessererweiternde Kontur aufweist, und den axial wirkenden Kragenbereich. Der Kragenbereich kann bei Montage überdrückt und kurzzeitig komprimiert werden, wobei jedoch der Kragenbereich nach Ablassen des Drucks die Befestigungshülse in die Montagestellung zieht. Zur Erhöhung der axialen bzw. kardanischen Steifigkeit (hinsichtlich Axial- /Taumel-Frequenz) kann ein in einem Ringspalt zwischen dem Kragenabschnitt der Befestigungshülse und einer in Radialrichtung gegenüberliegenden Fläche der Masse ebenfalls eine Elastomerschicht angeordnet sein, vorzugsweise einstückig mit dem Elastomerkörper.

Gemäß einer Weiterbildung des erfindungsgemäßen Lagers können die durchmessererweiternde Kontur des Elastomerkörpers und der Kragenbereich ausgebildet sein, um den Elastomerkörper in Axialrichtung vorzuspannen. Durch beispielsweise eine geeignete Auswahl der Geometrie und/oder Anordnung der durchmessererweiternden Kontur des Elastomerkörpers und des Kragenbereichs sind beide in einer Gleichgewichtslage unter Vorspannung angeordnet. Dies führt zu entgegengesetzten Kräften, die auf die Befestigungshülse wirken.

Gemäß einer Weiterbildung des erfindungsgemäßen Lagers kann der Elastomerkörper einen Hohlraumbereich aufweisen, welcher vom Schaftabschnitt getragen ist und mit der Befestigungsbohrung einen Hohlraum ausbildet. Der Hohlraumbereich kann in Axialrichtung zwischen dem Kragenbereich und dem Klemmbereich angeordnet sein, vorzugsweise zumindest bezüglich des Klemmbereichs unmittelbar. Der Außendurchmesser des Hohlraumbereichs des Elastomerkörpers kann kleiner sein als der Innendurchmesser der in Radialrichtung gegenüberliegenden Innenfläche der Befestigungsbohrung. Der Hohlraumbereich dient einer einfachen Montage, da das durch die Überdeckung weggedrückte Elastomer in den Hohlraumbereich eindrücken und so ausweichen kann. Der Hohlraumbereich kann eine Ringnut umfassen, die gegenüber der durchmessererweiternden Kontur des Elastomerkörpers oder zumindest gegenüber einem benachbarten Abschnitt in Radialrichtung zurückspringt.

Gemäß einer Weiterbildung des erfindungsgemäßen Lagers kann die Befestigungshülse einen sich in Radialrichtung erstreckenden Stützabschnitt aufweisen, welcher benachbart des größten Durchmessers der durchmessererweiternden Kontur des Elastomerkörpers angeordnet sein kann. Denkbar ist auch ein Axialzwischenraum zwischen Stützabschnitt und größtem Durchmessers der durchmessererweiternden Kontur des Elastomerkörpers. Um die klemmende Wirkung zu verstärken, kann die Befestigungshülse den zusätzlichen Stützabschnitt aufweisen, der keine Bindung zum oder Anlage an den Elastomerkörper haben muss. Sofern jedoch ein Axialzwischenraum vorhanden ist, eine oder keine Bindung zwischen Elastomer und Innenhülse besteht, kann sich der Elastomerkörper gegenüber dem Stützabschnitt leichter verformen und vereinfacht so ein Einstecken in die Befestigungsbohrung. Bei einer eventuellen Demontage hingegen kann sich der Elastomerkörper aber am Stützabschnitt massiv abstützen. Der Stützabschnitt kann einen Aussendurchmesser aufweisen, welcher kleiner ist als der kleinste Innendurchmesser der Befestigungsbohrung, so dass die Hülse einfach montierbar ist.

Gemäß einer Weiterbildung des erfindungsgemäßen Lagers kann die durchmessererweiternde Kontur des Elastomerkörpers als Kegelstumpfkontur oder als Teilovoidkontur ausgebildet sein. Dadurch kann das Abstützverhalten beeinflusst werden.

Gemäß einer Weiterbildung des erfindungsgemäßen Lagers kann die Befestigungshülse einen Zentraldurchgriff aufweisen, durch welchen in Richtung Anschraubseite ein Befestigungselement, insbesondere eine Schraube, den Zentraldurchgriff durchgreifen kann. Vorzugsweise ist der Zentraldurchgriff innengewindefrei ausgebildet.

Gemäß einer Weiterbildung des erfindungsgemäßen Lagers kann der Elastomerkörper und/oder die Befestigungsbohrung eine Einlaufschräge für das jeweils andere Element aufweisen.

Die zumindest eine Einlaufschräge ist gegenüber eine Querschnittsebene verkippt. Dadurch ist eine Montage erheblich vereinfacht, da dem Elastomerkörper eine Verformungsrichtung vorgegeben werden und zugleich eine Zentrierung von Elastomerkörper oder Befestigungshülse und Befestigungsbohrung erfolgen kann.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a: eine Vormontagestellung einer erfindungsgemäßen Befestigungshülse erster Ausführung im Längsschnitt;
- Fig. 1b: eine Montagestellung der Befestigungshülse nach Fig. 1a; und
- Fig. 2: eine erfindungsgemäße Befestigungshülse zweiter Ausführung im Längsschnitt.

In den Figuren sind gleiche oder einander entsprechende Elemente jeweils mit den gleichen Bezugszeichen bezeichnet und werden daher, sofern nicht zweckmäßig, nicht erneut beschrieben. Bereits beschriebene Merkmale werden zur Vermeidung von Wiederholungen nicht erneut beschrieben und sind auf alle Elemente mit gleichen oder einander entsprechenden Bezugszeichen anwendbar, sofern nicht explizit ausgeschlossen. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z. B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

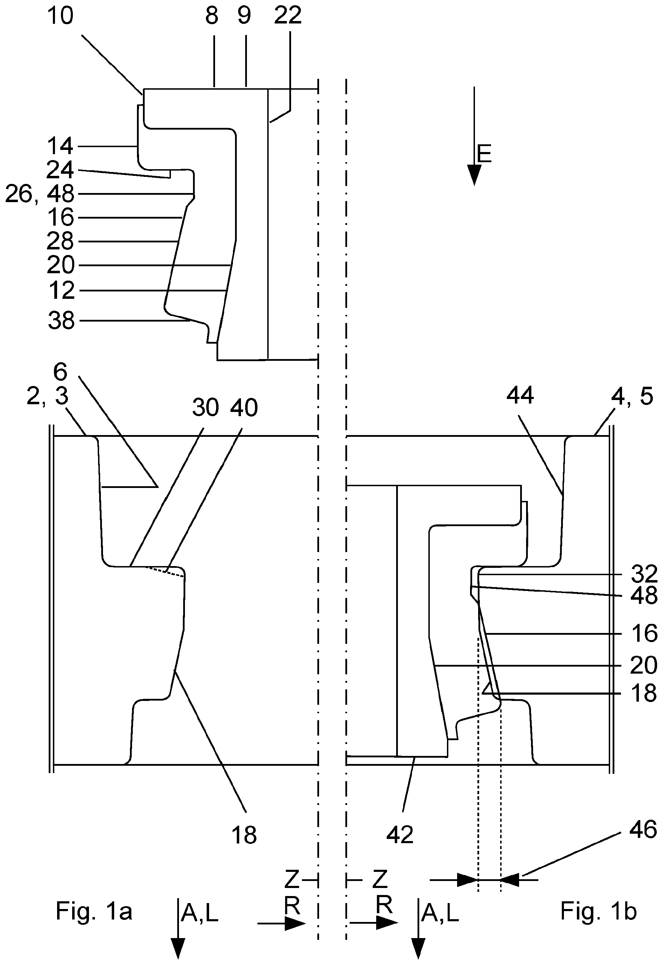

Die Figuren 1a und 1b zeigen halbseitige Ansichten identischer elastischer Lager 2, die als Schwingungstilger 3 dargestellt sind. Fig. 1a zeigt eine Vormontagestellung, in welcher eine Befestigungshülse 8 noch nicht in einer Befestigungsbohrung 6 platziert ist, und Fig. 1b zeigt eine Montagestellung, bei welcher diese Platzierung in eine Einschraubrichtung E bereits erfolgte. Daher können Bezugszeichen auf die jeweils andere Figur übertragen werden.

Das Lager 2 umfasst eine Masse 4, die als Tilgermasse 5 dargestellt ist. Die Masse 4 umfasst zumindest die eine Befestigungsbohrung 6, welche durchgehend ausgeführt ist. Die Befestigungsbohrung 6 ist von einer Zentrallängsachse Z in Axialrichtung A bzw. Längsrichtung L durchsetzt. Die Befestigungsbohrung 6 weist innenumfangsseitig eine Kontur 18 auf. Das Lager 2 umfasst zudem zumindest die eine Befestigungshülse 8, welche einen Grundkörper 9 umfasst mit einem sich in Radialrichtung R erstreckenden Kragenabschnitt 10 und einem sich in Längsrichtung L erstreckenden Schaftabschnitt 12. Die Befestigungsbohrung 6 und/oder die Befestigungshülse 8 kann/können rotationssymmetrisch bezüglich der Zentrallängsachse Z ausgebildet sein. Die Befestigungshülse 8 weist einen sich entlang der Zentrallängsachse Z erstreckenden Zentraldurchgriff 22 auf, durch welchen in Einschraubrichtung E zu einer Anschraubseite 42 hin ein Befestigungselement, insbesondere eine Schraube, den Zentraldurchgriff 22 durchgreifen und dort an einer Vorrichtung verschraubt werden kann. Außenumfangsseitig der Befestigungshülse 8 ist ein Elastomerkörper 14 angeordnet, welcher zudem auf die Befestigungshülse 8 anvulkanisiert sein kann. Der Elastomerkörper 14 weist außenumfangsseitig eine Kontur 16 auf. Der Elastomerkörper 14 kann rotationssymmetrisch bezüglich der Zentrallängsachse Z ausgebildet sein.

Die Längsschnittverläufe der Kontur 18 der Befestigungsbohrung 6 und der Kontur 16 der Befestigungshülse 8 sind derart aufeinander abgestimmt, dass sie in Montagestellung ein axiales Auswandern der Befestigungshülse 8 in zumindest die Axialrichtung A sicher verhindern. Hierzu ist die Kontur 16 des Elastomerkörpers 14 zumindest im Bereich des Schaftabschnitts 12 durchmessererweiternd ausgebildet, wobei deren Durchmesser mit zunehmendem Längsabstand zum Kragenabschnitt 10 zunimmt. Zudem weist die Befestigungshülse 8 im Bereich des Schaftabschnitts 12 eine durchmessererweiternde Kontur 20 auf, die sich in gleichem Maße wie die durchmessererweiternde Kontur 16 des Elastomerkörpers 14 erweitert, um diesen zu hinterbauen. Längsschnittlich verlaufen die Konturen 16 und 20 parallel.

Der Elastomerkörper 14 weist somit zumindest abschnittsweise eine Kegelstumpfkontur auf, wobei der größere Durchmesser der Kontur 16 an der Anschraubseite 42 liegt. Die durchmessererweiternde Kontur 16 des Elastomerkörpers 14 wird von einem Klemmbereich 28 im Bereich des Schaftabschnitts 12 der Befestigungshülse 8 getragen. Der Elastomerkörper 14 weist zudem zwei weitere Abschnitte auf, nämlich einen Kragenbereich 24, der von dem Kragenabschnitt 10 getragen ist und in Montagestellung an einer Stufe 30 in der Befestigungsbohrung 6 anliegt, und einen Hohlraumbereich 26, der vom Schaftabschnitt 12 getragen ist und mit der Befestigungsbohrung 6 einen Hohlraum 32 ausbildet. Zur Ausbildung des Hohlraumbereichs 26 weist der Elastomerkörper 14 eine Ringnut 48 auf, welche gegenüber der durchmessererweiternden Kontur 16 in Radialrichtung R nach innen zurückspringt. In einem Ringspalt 44 zwischen Kragenabschnitt 10 der Befestigungshülse 8 und in Radialrichtung R gegenüberliegender Fläche der Masse 4 kann ebenfalls eine Elastomerschicht angeordnet sein.

Die Kontur 18 der Befestigungsbohrung 6 ist zumindest abschnittsweise durchmessererweiternd ausgebildet. Die Kontur 18 erweitert sich in gleichem Maße wie die durchmessererweiternde Kontur 16 des Elastomerkörpers 14. Die durchmessererweiternde Kontur 16 des Elastomerkörpers 14 und dessen Kragenbereich 24 sind derart in Bezug zur Befestigungsbohrung 6 dimensioniert, dass der Elastomerkörper 14 in Axialrichtung A und Radialrichtung R vorgespannt ist. In der Montagestellung sind durchmessererweiternde Kontur 16 und Kragenbereich 24 in einer Gleichgewichtslage unter Vorspannung angeordnet.

In Fig. 1a ist ersichtlich, dass der Elastomerkörper 14 zumindest an seiner durchmesserstärksten Stelle eine radiale Überdeckung 46 zur Kontur 18 der Befestigungsbohrung 6 aufweist. Somit kann bei Montage der Befestigungshülse 8 in der Befestigungsbohrung 6 der Elastomerkörper 14 aus seinem unbelasteten Zustand weggedrückt werden, vorzugsweise zumindest teilweise in den Hohlraum 32 oder die dort ausgebildete Ringnut 48. Ist die Befestigungshülse 8 komplett in die Befestigungsbohrung 6 gesteckt, kann sie zum Ende der Montage in Einschraubrichtung E überdrückt werden. Dabei wird der Kragenbereich 24 komprimiert und der Klemmbereich 28 schnappt nach vorne bzw. in Richtung Anschraubseite 42. Sodann zieht der Kragenbereich 24 entgegen seiner Komprimierung die Hülse 8 ein Stück weit entgegen der Einschraubrichtung E in die Bohrung 6 hinein. Danach sind sowohl der Kragenbereich 24 als auch der Klemmbereich 28 in einer Gleichgewichtslage unter Vorspannung montiert. In entgegengesetzte Richtung zur Einschraubrichtung E ist kein Zurückweg oder axiales Auswandern möglich durch die Überdeckung 46, wobei dieser Effekt verstärkt wird durch den Hinterbau mittels Kontur 20.

Zur leichteren Montage können Einlaufschrägen 38, 40 vorgesehen sein, wobei die Einlaufschräge 38 stirnseitig des Elastomerkörpers 14 angeordnet ist und die Einlaufschräge 40 in der Befestigungsbohrung 6 lediglich in Fig. 1a angedeutet ist. Die Einlaufschrägen 38, 40 sind gegenüber eine Querschnittsebene verkippt und verjüngen sich in Richtung Anschraubseite 42. Die Einlaufschrägen 38, 40 können längsschnittlich parallel zueinander ausgeführt sein, jedoch ist mit Vorteil auch denkbar, dass die Einlaufschräge 40 der Befestigungsbohrung 6 eine größere Verkippung aufweist, bzw. mit der Querschnittsebene einen größeren Winkel einschließt.

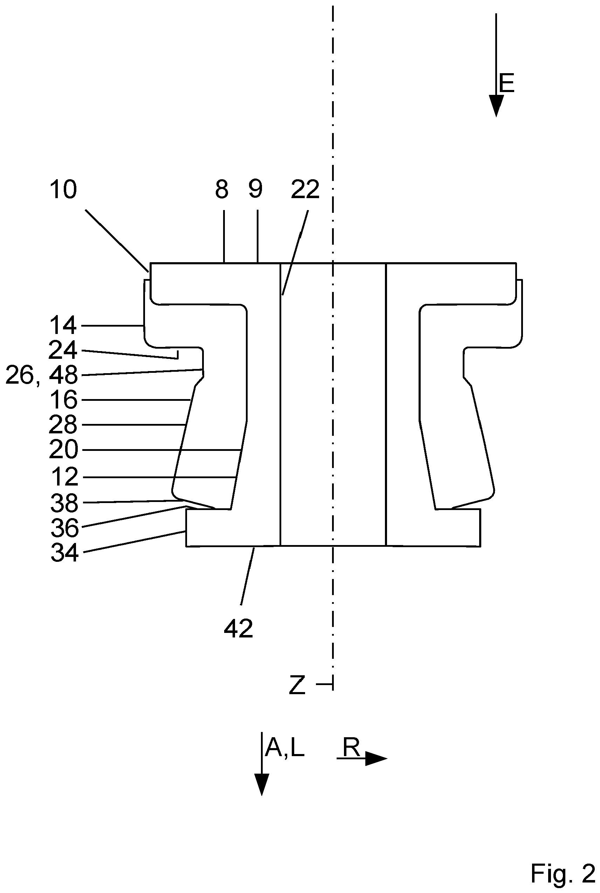

Fig. 2 zeigt ebenfalls eine erfindungsgemäße Befestigungshülse 8, jedoch nun in Alleinstellung. Zur Vermeidung von Wiederholungen sollen nachfolgend lediglich die Unterschiede zur Befestigungshülse 8 der Figuren 1a und 1b beschrieben werden.

Die Befestigungshülse 8 weist einen sich in Radialrichtung R erstreckenden Stützabschnitt 34 auf, welcher an der dem Kragenabschnitt 10 gegenüberliegenden Seite ausgebildet ist. Der Stützabschnitt 34 ist benachbart des größten Durchmessers der durchmessererweiternden Kontur 16 des Elastomerkörpers 14 angeordnet, jedoch muss dies nicht zwingend so ausgeführt sein. Zwischen Stützabschnitt 34 und Elastomerkörper 14 ist ein Axialzwischenraum 36 ausgebildet, der längsschnittlich keilartig ausgeführt ist. Ein solcher Axialzwischenraum 36 muss jedoch nicht vorhanden sein. Der Elastomerkörper 14 kann auch von dem Stützabschnitt 34 getragen oder dort anvulkanisiert sein. Der Stützabschnitt 34 weist einen Aussendurchmesser auf, welcher kleiner ist als der kleinste Innendurchmesser der Befestigungsbohrung 8.

Die Erfindung ist nicht auf eine der vorbeschriebenen Ausführungsformen beschränkt, sondern in vielfältiger Weise abwandelbar. Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

In den Rahmen der Erfindung fallen sämtliche Kombinationen aus zumindest zwei von den in der Beschreibung, den Ansprüchen und/oder den Figuren offenbarten Merkmalen.

Zur Vermeidung von Wiederholungen sollen vorrichtungsgemäß offenbarte Merkmale auch als verfahrensgemäß offenbart gelten und beanspruchbar sein. Ebenso sollen verfahrensgemäß offenbarte Merkmale als vorrichtungsgemäß offenbart gelten und beanspruchbar sein.

### Bezugszeichenliste

- 2: Lager
- 3: Schwingungstilger
- 4: Masse
- 5: Tilgermasse
- 6: Befestigungsbohrung
- 8: Befestigungshülse
- 9: Grundkörper
- 10: Kragenabschnitt
- 12: Schaftabschnitt
- 14: Elastomerkörper
- 16: Kontur
- 18: Kontur
- 20: Kontur
- 22: Zentraldurchgriff
- 24: Kragenbereich
- 26: Hohlraumbereich
- 28: Klemmbereich
- 30: Stufe
- 32: Hohlraum
- 34: Stützabschnitt
- 36: Axialzwischenraum
- 38: Einlaufschräge
- 40: Einlaufschräge
- 42: Anschraubseite
- 44: Ringspalt
- 46: Überdeckung
- 48: Ringnut

- A: Axialrichtung
- E: Einschraubrichtung
- L: Längsrichtung
- R: Radialrichtung
- Z: Zentrallängsachse

## Patentansprüche

1. Elastisches Lager, umfassend eine Masse (4), die mindestens eine Befestigungsbohrung (6) für eine Befestigungshülse (8) aufweist, wobei die Befestigungsbohrung (6) von einer Zentrallängsachse (Z) durchsetzt ist, mindestens eine Befestigungshülse (8) mit einem sich in Radialrichtung (R) erstreckenden Kragenabschnitt (10) und einem sich in Längsrichtung (L) erstreckenden Schaftabschnitt (12), wobei die Befestigungshülse (8) in der Befestigungsbohrung (6) festgelegt ist, sowie einen Elastomerkörper (14), welcher außenumfangsseitig der Befestigungshülse (8) angeordnet ist, **dadurch gekennzeichnet, dass** der Elastomerkörper (14) im Bereich des Schaftabschnitts (12) eine durchmessererweiternde Kontur (16) aufweist, deren Durchmesser mit zunehmendem Längsabstand zum Kragenabschnitt (10) zunimmt und die Befestigungsbohrung (6) eine durchmessererweiternde Kontur (18) aufweist, die sich in gleichem Maße wie die durchmessererweiternde Kontur (16) des Elastomerkörpers (14) erweitert, wobei der Elastomerkörper (14) durch die Masse (4) und die Befestigungshülse (8) zumindest in Radialrichtung (R) vorgespannt ist.

2. Elastisches Lager nach Anspruch 1, **dadurch gekennzeichnet, dass** die Befestigungshülse (8) im Bereich des Schaftabschnitts (12) eine durchmessererweiternde Kontur (20) aufweist, die sich in gleichem Maße wie die durchmessererweiternde Kontur (16) des Elastomerkörpers (14) erweitert.

3. Elastisches Lager nach einem der vorangehenden Ansprüche, **dadurch gekennzeichnet, dass** der Elastomerkörper (14) einen Kragenbereich (24) aufweist, welcher vom Kragenabschnitt (10) getragen ist und an einer Stufe (30) in der Befestigungsbohrung (6) anliegt.

4. Elastisches Lager nach Anspruch 3, **dadurch gekennzeichnet, dass** die durchmessererweiternde Kontur (16) und der Kragenbereich (24) den Elastomerkörper (14) in Axialrichtung (A) vorspannen.

5. Elastisches Lager nach einem der vorangehenden Ansprüche, **dadurch gekennzeichnet, dass** der Elastomerkörper (14) einen Hohlraumbereich (26) aufweist, welcher vom Schaftabschnitt (12) getragen ist und mit der Befestigungsbohrung (6) einen Hohlraum (32) ausbildet.

6. Elastisches Lager nach einem der vorangehenden Ansprüche, **dadurch gekennzeichnet, dass** die Befestigungshülse (8) einen sich in Radialrichtung (R) erstreckenden Stützabschnitt (34) aufweist, welcher benachbart des größten Durchmessers der durchmessererweiternden Kontur (16) des Elastomerkörpers (14) angeordnet ist.

7. Elastisches Lager nach einem der vorangehenden Ansprüche, **dadurch gekennzeichnet, dass** die durchmessererweiternde Kontur (16) des Elastomerkörpers (14) als Kegelstumpfkontur oder als Teilovoidkontur ausgebildet ist.

8. Elastisches Lager nach einem der vorangehenden Ansprüche, **dadurch gekennzeichnet, dass** die Befestigungshülse (8) einen Zentraldurchgriff (22) aufweist, durch welchen in Richtung Anschraubseite ein Befestigungselement, insbesondere eine Schraube, den Zentraldurchgriff (22) durchgreifen kann.

9. Elastisches Lager nach einem der vorangehenden Ansprüche, **dadurch gekennzeichnet, dass** der Elastomerkörper (14) und/oder die Befestigungsbohrung (6) eine Einlaufschräge (38, 40) für das jeweils andere Element aufweisen.
